# FASCICULE DE BREVET EUROPEEN

(11) **EP 3 357 213 B1**
(45) Date de publication et mention de la délivrance du brevet: **14.04.2021**
(21) Numéro de dépôt: 16790632.0
(22) Date de dépôt: 26.09.2016
(51) Int. Cl.: H04L 29/06, G06F 13/42, H04W 12/08, G06F 13/38, H04L 12/46, G06F 13/10

(54) **TECHNIQUE D'ACCÈS A UN DISPOSITIF PERIPHERIQUE**
VERFAHREN ZUM ZUGRIFF AUF EINE PERIPHERE VORRICHTUNG
METHOD FOR ACCESSING A PERIPHERAL DEVICE

(30) Priorité: 29.09.2015 FR 1559174
(43) Date de publication de la demande: 08.08.2018
(73) Titulaire: ORANGE, 75015 Paris (FR)
(72) Inventeur: GUIGUES, Pierre, 22300 Lannion (FR); GIOVANNI, Marc, 22560 Pleumeur Bodou (FR); ROULAND, Julien, 38400 Saint Martin D'heres (FR)
(86) Numéro de dépôt international: PCT/FR2016/052440
(87) Numéro de publication internationale: WO 2017/077201

(56) Documents cités:
- WO-A2-2005/033847
- US-A1- 2004 090 984
- US-A1- 2012 200 878

## Description

L'invention se rapporte au domaine général des télécommunications.

L'invention concerne plus particulièrement une technique d'accès par l'intermédiaire d'un réseau de communication étendu à un dispositif périphérique. Plus précisément, ce dispositif périphérique est connecté à un dispositif d'accès, ce dernier disposant d'un accès au réseau de communication étendu WAN (pour « Wide Area Network »), tel que le réseau Internet.

Lorsqu'un nouveau dispositif périphérique est connecté sur un autre dispositif par une interface série universelle USB (pour « Universal Serial Bus »), cet autre dispositif doit disposer d'un pilote logiciel pour exploiter ce dispositif périphérique. Un pilote logiciel est un programme permettant à un système d'exploitation de reconnaître un matériel et de l'utiliser. On considère par la suite que cet autre dispositif est apte à accéder à un réseau de communication étendu, tel que le réseau Internet. On l'appelle par la suite dispositif d'accès. Le dispositif d'accès, lorsqu'il ne dispose pas du pilote logiciel pour le dispositif périphérique, cherche alors à obtenir ce pilote logiciel afin de l'installer pour exploiter le dispositif périphérique.

Dans un réseau local, un tel dispositif d'accès correspond par exemple à une passerelle d'accès, et permet notamment à des dispositifs localisés dans un site client d'accéder au réseau de communication étendu. Le site client correspond par exemple à une entreprise, une habitation. Pour un réseau local, il s'agit notamment de la passerelle d'accès, d'un décodeur TV « Set-Top-Box », d'un terminal mobile. Dans le contexte d'un réseau domotique, il s'agit également d'équipements d'électroménager, de systèmes d'alarme, de capteurs.

Dans ce contexte de réseau domotique, la tendance actuelle est de fournir une habitation de plus en plus confortable et sûre. Ceci nécessite l'accueil dans le réseau local de nombreux capteurs de technologies ou de protocoles divers. En effet, plusieurs technologies et protocoles sont susceptibles de cohabiter dans un même environnement domestique. De manière générale, un boîtier domotique gère les connexions avec les différents capteurs et/ou dispositifs. Ce boîtier domotique peut également être intégré à la passerelle d'accès au réseau. On comprend que dans cet environnement très évolutif, il est difficile de prévoir un boîtier domotique adapté à toutes les configurations qu'il est susceptible de devoir fournir. A titre d'exemple illustratif, lorsque l'utilisateur souhaite ajouter un capteur d'une technologie radio non proposée par le boîtier domotique, une première solution consiste à changer le boîtier domotique ou la passerelle d'accès. Ceci est très contraignant et onéreux pour l'utilisateur et également pour le fournisseur du boîtier domotique. Une deuxième solution consiste à connecter à un dispositif d'accès par une interface série un dispositif périphérique compatible avec cette technologie radio. Ce dispositif d'accès peut correspondre aussi bien à la passerelle d'accès, qu'au boîtier domotique ou à tout autre dispositif localisé dans le site client. Ceci entraîne pour le dispositif d'accès une charge de gestion de pilote d'interface adapté au dispositif périphérique connecté.

La publication brevet US2004/0090984A1 décrit un système dans lequel un dispositif de contrôle accède à un dispositif périphérique connecté à un dispositif adaptateur de réseau dans un réseau local.

Un des buts de l'invention est de remédier à des insuffisances/inconvénients de l'état de la technique et/ou d'y apporter des améliorations.

Selon un premier aspect, l'invention a pour objet un procédé d'accès par l'intermédiaire d'un réseau de communication étendu à un dispositif périphérique. Ce procédé comprend :
- réception par un dispositif de contrôle d'une donnée indiquant que le dispositif périphérique est connecté par une interface série à un dispositif d'accès disposant d'un accès au réseau de communication étendu ;
- envoi par le dispositif de contrôle à un dispositif d'accueil d'une commande d'association avec ledit dispositif périphérique au moyen d'une adresse associée au dispositif d'accès, ladite association permettant un accès à distance par ledit dispositif d'accueil par l'intermédiaire du dispositif d'accès pour exploiter le dispositif périphérique au moyen d'un pilote pour le dispositif périphérique installé sur le dispositif d'accueil.

Plus précisément, l'exécution de la commande d'association déclenche un envoi par le dispositif d'accueil au dispositif d'accès d'une commande d'externalisation des ressources du dispositif périphérique.

De manière correspondante, au niveau d'un dispositif d'accès, le procédé d'accès comprend :
- envoi par un dispositif d'accès disposant d'un accès au réseau de communication étendu à un dispositif de contrôle d'une donnée indiquant que le dispositif périphérique est connecté par une interface série audit dispositif d'accès ;
- réception par le dispositif d'accès d'une commande d'externalisation de ressources du dispositif périphérique en provenance d'un dispositif d'accueil ;
- association du dispositif d'accueil avec le dispositif périphérique par l'intermédiaire du dispositif d'accès, ladite association permettant un accès à distance par ledit dispositif d'accueil par l'intermédiaire du dispositif d'accès pour exploiter le dispositif périphérique au moyen d'un pilote pour le dispositif périphérique installé sur ledit dispositif d'accueil.

On appelle dispositif d'accès un dispositif disposant de capacités de connexion au réseau de communication étendu, directement ou par l'intermédiaire d'un autre dispositif. Une adresse dans le réseau de communication étendu permet de le joindre et lui permet de communiquer.

Ainsi, grâce au procédé d'accès, il est possible de déporter dans le réseau de communication la gestion des pilotes logiciels pour des dispositifs périphériques. Un dispositif d'accueil permet ainsi d'accueillir un ensemble de dispositifs périphériques de pilote logiciel identique. Un dispositif d'accueil correspond par exemple à un serveur accessible par l'intermédiaire du réseau de communication étendu. La mise à jour du pilote logiciel s'effectue alors de manière aisée et centralisée dans le réseau. Le dispositif d'accès est déchargé des actions de gestion de ce dispositif périphérique qui lui est connecté. Il joue uniquement un rôle d'intermédiaire dans la transmission des données échangées entre le dispositif périphérique et le dispositif d'accueil. Ceci permet également de déporter la logique de service dans le réseau et d'en décharger le dispositif d'accès. Il est ainsi possible d'accueillir tout type de dispositif périphérique, sans que cet accueil ne soit prévu au préalable sur le dispositif d'accès.

Le dispositif périphérique est connecté au dispositif d'accès par une interface série, par exemple de type USB, pour « Universal Serial Bus ». Un tel dispositif périphérique n'est généralement pas accessible directement. Il est ainsi contacté à une adresse associée au dispositif d'accès et sur un numéro de port USB qui lui est associé.

Au niveau du dispositif d'accès, il est prévu un module logiciel, appelé agent générique, qui peut ainsi prendre en charge n'importe quel dispositif périphérique qui est connecté au dispositif d'accès. Cet agent générique intervient dans le plan de contrôle en interagissant avec un dispositif de contrôle et également dans le plan de transport des données pour transmettre des données à un dispositif d'accueil, afin de connecter un dispositif périphérique à un service offert dans le réseau.

Dans le plan de transport de données, le procédé s'appuie sur une encapsulation dans des trames IP de trames reçues via une interface série, par exemple USB.

A titre d'exemple illustratif, une application domotique peut ainsi être mise en œuvre dans le réseau, des capteurs ou dispositifs du réseau domotique lui transmettant des données par un lien virtuel, établi par l'intermédiaire du dispositif d'accès et du dispositif d'accueil.

Plus généralement, dans cet environnement, il est possible de déporter dans le réseau des traitements de données pour offrir un service. Un tel service correspond par exemple à un service de suivi de la consommation électrique. Ce déport permet de limiter les mises à jour nécessaires des dispositifs d'accès (ou passerelles d'accès) pour accueillir de nouveaux capteurs et offrir de nouveaux services. Dans le plan de contrôle, une logique de service est exécutée pour mettre en relation un dispositif d'accès avec un dispositif d'accueil dans le plan de transport des données, afin de permettre d'exploiter des données issues de capteurs par l'intermédiaire d'un dispositif périphérique.

Les différents modes ou caractéristiques de réalisation mentionnés ci-après peuvent être ajoutés indépendamment ou en combinaison les uns avec les autres, aux étapes du procédé d'accès tel que défini précédemment.

Dans un mode de réalisation particulier, le procédé d'accès comprend en outre une sélection dudit dispositif d'accueil par le dispositif de contrôle en fonction d'un identifiant de produit du dispositif périphérique.

Il est ainsi possible de spécialiser des dispositifs d'accueil en fonction des identifiants de produit de dispositif périphérique. Ceci est particulièrement intéressant lorsque le dispositif d'accueil est administré par le fournisseur de ce dispositif périphérique pour fournir un service spécifique.

Dans un mode de réalisation particulier, le procédé d'accès comprend en outre une création d'une machine virtuelle formant un nouveau dispositif d'accueil, lorsqu'aucun dispositif d'accueil ne dispose de capacités requises pour accueillir le dispositif périphérique..

Le dispositif de contrôle dispose d'une vue d'ensemble sur les différents dispositifs d'accueil et peut ainsi gérer les ressources disponibles sur les dispositifs d'accueil.

Dans un mode de réalisation particulier, le procédé d'accès comprend en outre une création d'une machine virtuelle formant un nouveau dispositif d'accueil, lorsque les capacités d'accueil disponibles pour des dispositifs périphériques d'identifiant de produit identique sont inférieures à un seuil.

Dans ce mode de réalisation particulier, un dispositif d'accueil correspond à une machine virtuelle reposant sur au moins une machine physique. Le dispositif de contrôle est notamment agencé pour créer/supprimer des machines virtuelles, par exemple en fonction de demandes de connexion émises par l'ensemble des agents génériques de dispositifs d'accès. Une machine virtuelle reproduit les comportements et les caractéristiques d'une machine physique. Ainsi, de manière comparable à une machine physique, une machine virtuelle est caractérisée par le nombre de processeurs, la quantité de mémoire, les unités de stockage et les interfaces réseaux dont elle dispose. En outre, elle fonctionne de façon identique à n'importe quelle machine réelle.

En fonction des informations, indiquant une connexion d'un dispositif périphérique à une interface série d'un dispositif d'accès, envoyées par l'agent générique au dispositif de contrôle, ce dernier peut adapter les ressources pour permettre une exploitation directe du dispositif périphérique par un dispositif d'accueil. Cette activation dynamique de ressources se fait en fonction de certains critères techniques comme les identifiants de produits mais aussi en fonction de la disponibilité des ressources. Ainsi, si certaines ressources pour un type de dispositif périphérique sont en nombre insuffisant par rapport à un parc en croissance, le dispositif de contrôle va pouvoir créer de nouvelles ressources. Au contraire, si des dispositifs périphériques de même type sont mis hors service, le dispositif de contrôle peut réaffecter les ressources inutilisées.

Il est ainsi possible d'adapter dynamiquement le système d'accueil, formé par le dispositif de contrôle et un ou plusieurs dispositifs d'accueil, afin qu'il puisse prendre en charge de nouveaux dispositifs périphériques en fonction des demandes. Le système d'accueil s'adapte également aux demandes de connexion en provenance de nouveaux produits, en créant à la demande des dispositifs d'accueil aptes à les accueillir.

Dans un mode de réalisation particulier, le procédé d'accès comprend un envoi au dispositif d'accès d'au moins un identifiant de produit ne pouvant être accueilli.

Le dispositif d'accès connaît de cette manière les types de dispositif pouvant être accueillis dans le réseau et ne sollicite pas le dispositif de contrôle dans le cas contraire. La gestion de ce type de dispositif ne peut alors être effectuée que localement.

Selon un deuxième aspect, l'invention concerne également un dispositif de contrôle pour un accès par l'intermédiaire d'un réseau de communication étendu à un dispositif périphérique. Ce dispositif de contrôle comprend :
- un module de réception d'une donnée indiquant que le dispositif périphérique est connecté par une interface série à un dispositif d'accès disposant d'un accès au réseau de communication étendu ;
- un module de commande d'association, agencé pour envoyer à un dispositif d'accueil une commande d'association avec ledit dispositif périphérique au moyen d'une adresse associée au dispositif d'accès, l'exécution de la commande d'association déclenchant un envoi par le dispositif d'accueil au dispositif d'accès d'une commande d'externalisation des ressources du dispositif périphérique et ladite association permettant un accès à distance par ledit dispositif d'accueil par l'intermédiaire du dispositif d'accès pour exploiter le dispositif périphérique au moyen d'un pilote pour le dispositif périphérique installé sur ledit dispositif d'accueil.

Les avantages énoncés pour le procédé d'accès selon le premier aspect sont transposables directement au dispositif de contrôle.

Dans un mode de réalisation particulier, le dispositif de contrôle comprend en outre un module de gestion de ressources virtualisées, agencé pour créer ou supprimer au moins une machine virtuelle formant un dispositif d'accueil.

Les avantages énoncés pour le procédé d'accès selon le premier aspect lors de sa mise en œuvre dans un environnement virtualisé sont transposables directement au dispositif de contrôle.

Selon un troisième aspect, l'invention concerne également un système d'accueil pour un accès par l'intermédiaire d'un réseau de communication étendu à un dispositif périphérique, ledit système comprenant au moins un dispositif de contrôle selon le deuxième aspect et au moins un dispositif d'accueil comprenant :
- un module d'exploitation, agencé pour exploiter à distance un dispositif périphérique au moyen d'un pilote pour le dispositif périphérique installé sur ledit dispositif d'accueil ;
- un module d'association, agencé pour recevoir une commande d'association avec un dispositif périphérique au moyen de l'adresse d'un dispositif d'accès et pour, lors de l'exécution de la commande d'association, envoyer une commande d'externalisation de ressources du dispositif périphérique au dispositif d'accès.

Les avantages énoncés pour le procédé d'accès selon le premier aspect sont transposables directement au système d'accueil.

Un système d'accueil selon le troisième aspect et un dispositif d'accès à un réseau de communication étendu, comprenant :
- au moins un connecteur, agencé pour accueillir au moins un dispositif périphérique par une interface série ;
- un module logiciel, agencé pour envoyer à un dispositif de contrôle une donnée indiquant que le dispositif périphérique est connecté au moyen du connecteur, pour recevoir une commande d'externalisation de ressources du dispositif périphérique en provenance d'un dispositif d'accueil et pour associer ledit dispositif d'accueil avec ledit dispositif périphérique, ladite association permettant un accès à distance par le dispositif d'accueil pour exploiter le dispositif périphérique au moyen d'un pilote pour le dispositif périphérique installé sur ledit dispositif d'accueil,
forment un système d'accès par l'intermédiaire d'un réseau de communication étendu à un dispositif périphérique.

Selon un quatrième aspect, l'invention concerne un programme pour un dispositif, comprenant des instructions de code de programme destinées à commander l'exécution de celles des étapes du procédé d'accès précédemment décrit mises en œuvre par le dispositif, lorsque ce programme est exécuté par ce dispositif et un support d'enregistrement lisible par un dispositif sur lequel est enregistré un programme pour un dispositif.

Le dispositif correspond à un dispositif de contrôle.

Les avantages énoncés pour le procédé d'accès selon le premier aspect sont transposables directement au programme pour un dispositif et au support d'enregistrement.

La technique d'accès à un dispositif périphérique sera mieux comprise à l'aide de la description suivante de modes de réalisation particuliers, en référence aux dessins annexés sur lesquels :
- la figure 1 représente un système d'accueil de dispositifs périphériques dans son environnement dans un mode de réalisation particulier ;
- la figure 2 illustre des échanges pour mettre en œuvre un procédé d'accès dans un système d'accueil de dispositifs périphériques selon un mode particulier de réalisation ;
- la figure 3 illustre une des étapes du procédé d'accès dans un mode particulier de réalisation ;
- la figure 4 représente un dispositif d'accès selon un mode particulier de réalisation ;
- la figure 5 représente un dispositif de contrôle selon un mode particulier de réalisation ;
- la figure 6 représente un dispositif d'accueil selon un mode particulier de réalisation.

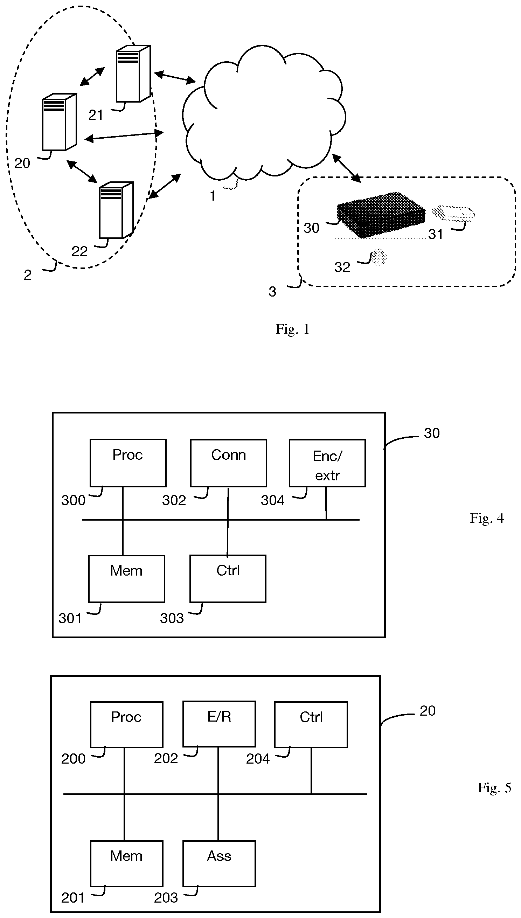

La **figure 1** représente, dans son environnement, un système d'accueil 2 de dispositifs périphériques, comprenant un dispositif de contrôle 20 et deux dispositifs d'accueil 21, 22. Ces différents dispositifs sont accessibles par l'intermédiaire d'un réseau de communication étendu 1 ou WAN (pour « Wide Area Network »), tel que le réseau Internet (également appelé réseau IP pour « Internet Protocol »). Le dispositif de contrôle 20 est agencé pour communiquer dans le plan de contrôle avec un dispositif d'accès 30 et les dispositifs d'accueil 21, 22. Aucune limitation n'est attachée au nombre de dispositifs de contrôle et de dispositifs d'accueil.

Un dispositif d'accès 30 dispose d'un accès au réseau de communication étendu. Une adresse dans le réseau IP lui est associée et lui permet d'être joint à partir d'autres dispositifs connectés au réseau de communication étendu et de communiquer vers de tels autres dispositifs. Une adresse de ce type est connue sous la dénomination d'adresse publique.

Le dispositif d'accès 30 comprend notamment un connecteur série de type USB, pour (« Universal Serial Bus »). Aucune limitation n'est attachée à ce type de connecteur filaire. Dans ce mode de réalisation particulier, le dispositif d'accès 30 comprend un module d'encapsulation et d'extraction, agencé pour encapsuler des messages d'entrée USB dans des charges utiles de trames IP (ou « Payload » en anglais) et pour extraire des messages de sortie USB à partir de trames IP. Ce module logiciel d'encapsulation et d'extraction est également appelé par la suite agent générique. Ce module logiciel est défini dans le cadre du projet Opensource USB/IP, dont l'objectif est de développer un système de partage de dispositifs USB sur un réseau de type IP.

Un dispositif périphérique 31 est connecté au dispositif d'accès 30 au moyen du connecteur USB, c'est-à-dire au moyen d'une interface ou liaison série. Un tel dispositif périphérique correspond par exemple à une manette de jeu, à un périphérique de stockage (également appelé clé USB), à une clé permettant de se connecter à un réseau sans fil (Wi-Fi, bluetooth, 3G ou infrarouge,..), à une clé permettant d'obtenir des données d'un capteur domotique, ou encore de recevoir la télévision numérique, ...

Les dispositifs d'accueil 21, 22 comprennent également un module d'encapsulation et d'extraction, agencé pour encapsuler des messages d'entrée USB dans des charges utiles de trames IP et extraire des messages de sortie USB à partir de charges utiles de trames IP. Les dispositifs d'accueil 21, 22 peuvent alors échanger des données à distance dans le plan de transport de données avec des dispositifs périphériques USB. Les dispositifs d'accueil 21, 22 sont également agencés pour exécuter un module logiciel pilote (également appelé « driver » en anglais) destiné à permettre à un système d'exploitation de reconnaître un matériel et de l'utiliser. Grâce à ce pilote logiciel, il est alors possible de recevoir et d'envoyer (échanger) des messages d'entrée/sortie USB. Une application logicielle peut alors les interpréter. Un dispositif d'accueil 21, 22 permet ainsi d'exploiter à distance un dispositif périphérique 31 connecté à un dispositif d'accès 30, sans que ce dernier ne dispose du module logiciel pilote nécessaire pour une utilisation des ressources du dispositif périphérique.

Dans un mode de réalisation particulier, le dispositif de contrôle 20 est notamment agencé pour créer, supprimer et gérer des machines virtuelles 21, 22 reposant sur des machines physiques. Les machines physiques ne sont pas représentées sur la figure 1 par souci de simplification. Le dispositif de contrôle 20 et les dispositifs d'accueil 21, 22 permettent de fournir une application logicielle déployée dans un système informatique dans le nuage aussi plus communément appelé « cloud » en anglais. Les environnements de type informatique dans le nuage se déclinent en trois grands niveaux d'offre selon le type de ressource mis à disposition. Le niveau « Infrastructure as a Service » (IaaS) a pour but de permettre d'accéder à des ressources matérielles (calcul, stockage, réseau) virtualisées s'appuyant sur un ensemble de ressources matérielles physiques. La couche « Software as a Service » (SaaS) vise à exposer des applications logicielles à destination des utilisateurs finaux. La couche intermédiaire « Platform as a Service » (PaaS) offre un ensemble d'outils et d'environnements d'exécution qui permettent de gérer le cycle de vie des applications. L'un des principaux intérêts de la virtualisation est de permettre la consolidation des ressources matérielles par mutualisation. Cela consiste à mettre en œuvre simultanément un ensemble de ressources matérielles virtualisées au niveau d'une infrastructure matérielle physique commune (i.e. plusieurs machines virtuelles s'exécutant sur une même machine physique). On se place par la suite au niveau IaaS. A titre d'exemple illustratif, la technologie de virtualisation est Openstack avec le module Nova Compute et la librairie libvirt.

Plus précisément, la figure 1 illustre un exemple de mise en œuvre de la technique d'accès dans lequel le dispositif d'accès 30 est une passerelle d'accès, permettant à des dispositifs d'un réseau de communication local 3 d'accéder au réseau de communication étendu 1. Le réseau local 3 est également connu sous les termes de réseau privé, d'entreprise ou résidentiel.

Le réseau local peut s'appuyer sur diverses technologies réseau, telles qu'un réseau filaire de type Ethernet selon la norme IEEE 802.3, un réseau sans fil de type Wi-Fi selon la norme IEEE 802.11 ou bien encore un réseau par courant porteur en ligne PLC (par exemple HomePlug ®, Alliance HD-PLC) selon la norme IEEE 1901.

Les dispositifs du réseau local 3 peuvent être n'importe quels dispositifs, par exemple domestiques, disposant d'une connexion réseau filaire ou sans-fil. Il peut s'agir par exemple d'un terminal ou téléphone mobile, de prises PLC, d'un décodeur TV (« Set-Top Box »), d'une console de jeux.

Dans la zone de service du réseau local, d'autres dispositifs sont également présents. Il s'agit par exemple d'un détecteur de fumée 32, de dispositifs électroménagers (non représentés), d'un capteur de présence, ... Un seul dispositif domotique est représenté sur la figure 1. Aucune limitation n'est attachée au nombre de dispositifs ou capteurs présents dans le réseau local 3.

A titre d'exemple illustratif, le détecteur de fumée 32 est agencé pour communiquer sur un réseau d'accès radio de type Zigbee. Ce réseau d'accès radio est défini par l'Alliance Zigbee. Il se base au niveau radio sur la norme IEEE 802.15.4 définie pour les réseaux sans fil à dimension personnelle WPAN (pour « Wireless Personal Area Networks ») et définit un protocole de haut niveau permettant un échange de données. Aucune limitation n'est attachée à cette technologie radio. D'autres technologies peuvent également être envisagées telles que Bluetooth ® Low Energy BLE, Zwave, EnOcean, Sigfox, WMbus, ....

On se place par la suite dans le cas particulier où la passerelle d'accès 30 ne supporte pas une interface sans fil de type Zigbee. Dans ce cas particulier, le dispositif périphérique 31 qui est connecté sur le dispositif d'accès 30 est une clé d'accès, agencée pour communiquer sur un réseau d'accès radio de type Zigbee. Cette clé d'accès 31 comprend également un connecteur série de type USB. Elle est connue sous la terminologie de « Dongle USB ». Un dispositif d'accueil 21, 22 permet ainsi d'exploiter à distance la clé d'accès 31 connectée à la passerelle d'accès 30, sans que cette dernière ne dispose du module logiciel pilote nécessaire pour une utilisation des ressources de la clé d'accès. Cette exploitation permet en particulier à un des dispositifs d'accueil 21, 22 d'échanger des données avec le dispositif domotique 32 par l'intermédiaire de la clé d'accès 31.

Dans un mode de réalisation particulier, le dispositif périphérique 31 est connecté au boitier domotique, qui correspond alors au dispositif d'accès. Dans d'autres modes de réalisation, le dispositif périphérique 31 est connecté à des dispositifs du réseau local 3. A titre illustratif, pour un réseau d'entreprise, un dispositif périphérique 31 est connecté sur un routeur du réseau d'entreprise, un autre dispositif périphérique de même type est connecté sur un autre routeur de ce réseau d'entreprise et ces deux dispositifs périphériques sont exploités à distance par un même dispositif d'accueil.

D'autres dispositifs, non représentés sur la figure 1, peuvent également être connectés aux dispositifs d'accueil 21, 22. Il s'agit par exemple de dispositifs de collecte agencés pour recevoir en provenance de capteurs domotiques des mesures physiques, pour analyser celles-ci afin de fournir un service.

Il peut par exemple s'agir d'un service de suivi de consommation électrique, de surveillance dans le cadre d'un service de supervision d'une habitation, d'un service de maintien à domicile d'une personne âgée. Ces services sont uniquement donnés à titre illustratif et aucune limitation n'est attachée à ces exemples. Les dispositifs d'accueil peuvent également mettre en œuvre la logique de service.

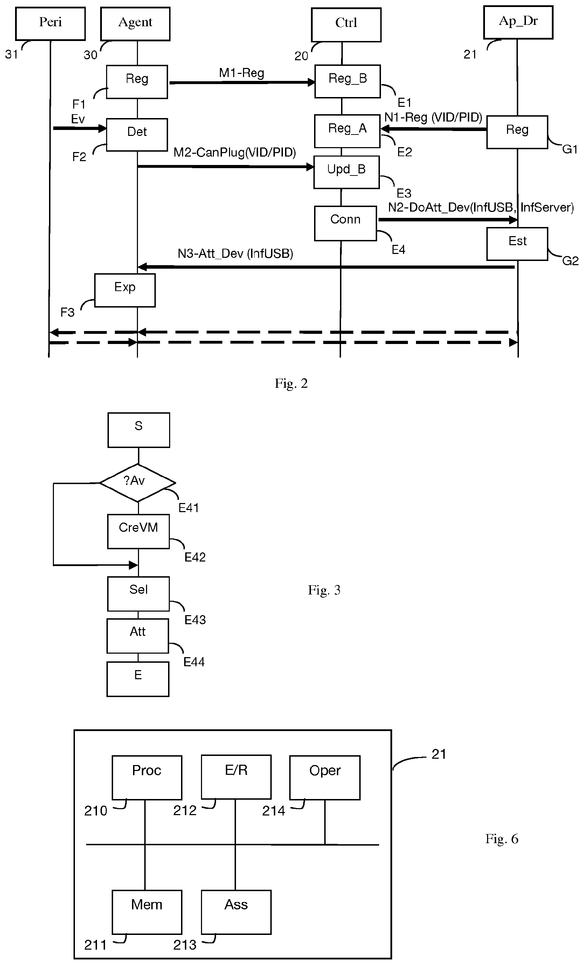

Nous allons maintenant décrire la technique d'accès à un dispositif périphérique dans un mode particulier de réalisation en relation avec la **figure 2****.**

Dans une étape F1, le dispositif d'accès 30 s'enregistre auprès du dispositif de contrôle 20 par un message d'enregistrement M1. Ce message d'enregistrement comprend notamment une adresse associée au dispositif d'accès 30 et un identifiant de port IP. Cette adresse est une adresse publique par laquelle il est possible de joindre le dispositif d'accès 30 à partir du réseau de communication étendu. Il est rappelé ici, que le dispositif périphérique connecté ne dispose pas d'adresse publique, par laquelle il est possible de le joindre à partir du réseau de communication étendu. L'identifiant de port IP permet de communiquer avec le module d'encapsulation et d'extraction (c'est-à-dire l'agent générique).

Ce message d'enregistrement M1 est reçu par le dispositif de contrôle 20 dans une étape E1. Le dispositif de contrôle 20 enregistre les informations associées au dispositif d'accès 30 dans une mémoire de stockage.

Dans une étape G1, le dispositif d'accueil 21 s'enregistre auprès du dispositif de contrôle 20 par un message d'enregistrement N1. Ce message d'enregistrement N1 comprend notamment un ou plusieurs identifiants de fournisseur et de produit VID/PID (pour « Vendor Identity/Product Identity »).

Ce message d'enregistrement N1 est reçu par le dispositif de contrôle 20 dans une étape E2. Ce message N1 permet au dispositif de contrôle 20 d'identifier de quel(s) pilote(s) dispose le dispositif d'accueil 21. Le dispositif de contrôle 20 enregistre les informations associées au dispositif d'accueil 21 dans une mémoire de stockage.

L'exécution des étapes suivantes est déclenchée par la connexion du dispositif périphérique 31 sur le dispositif d'accès 30, notée sous la forme d'une flèche Ev sur la figure 2. Dans l'exemple particulier où le dispositif périphérique est une clé d'accès, une fois connectée, la clé d'accès permet de communiquer au moyen d'une interface sans fil avec le dispositif 32 du réseau local.

Dans une étape F2, le dispositif d'accès 30 détecte la connexion physique du dispositif périphérique 31 sur un port USB et envoie au dispositif de contrôle 20 une donnée M2 indiquant qu'un dispositif périphérique 31 lui est connecté. Cette donnée M2 correspond par exemple à un message et comprend un identifiant de fournisseur et de produit (VID/PID) du dispositif périphérique 31 et un identifiant de port USB.

Cette donnée est reçue par le dispositif de contrôle 20 dans une étape E3.

Dans une étape E4, le dispositif de contrôle 20 commande une association entre le dispositif d'accès 30 et le dispositif d'accueil 21 dans le plan de transport.

Plus précisément,, le dispositif de contrôle 20 envoie au dispositif d'accueil 21 une commande N2 d'association avec le dispositif périphérique 31 au moyen de l'adresse publique associée au dispositif d'accès 30 et l'identifiant de port IP. Cette commande d'association N2 comprend notamment l'identifiant de port USB.

Cette commande d'association N2 est reçue par le dispositif d'accueil 21 dans une étape G2. L'exécution de la commande d'association déclenche un envoi par le dispositif d'accueil au dispositif d'accès d'une commande d'externalisation des ressources du dispositif périphérique. Plus précisément, le dispositif d'accueil 21 commande au dispositif d'accès 30 d'externaliser les ressources du dispositif périphérique 31 par un message N3 de commande d'externalisation des ressources du dispositif périphérique. Cette commande N3 correspond à un accord d'accueil du dispositif périphérique 31 et comprend notamment l'identifiant de port USB. Cette commande N3 demande à un module d'encapsulation/d'extraction USB/IP de l'agent générique d'exporter le dispositif périphérique 31 par exécution d'une commande locale de marquage en tant que dispositif exportable. Le dispositif d'accès 30 peut alors jouer un rôle de serveur USB pour le dispositif périphérique 31 vis-à-vis d'un client USB du dispositif d'accueil 21 dans le plan de transport de données. Une fois cet export réalisé, le dispositif de contrôle 20 en est informé par un message M3 et mémorise cette information en association avec l'identifiant de port USB.

Le dispositif d'accueil 21 joue alors un rôle de client USB vis-à-vis du dispositif périphérique 31 via le dispositif d'accès 30 dans le plan de transport. Des blocs de requête USB (URB pour « USB Request Block ») sont envoyés par le dispositif d'accueil 21 à destination du dispositif périphérique 31 par l'intermédiaire du dispositif d'accès 30. Ces blocs de requête permettent au dispositif d'accueil 21 de transmettre et de recevoir des données à destination et en provenance du dispositif périphérique 31 de manière asynchrone. Le dispositif périphérique 31 est ainsi associé au pilote logiciel installé sur le dispositif d'accueil 21. Dans l'exemple de réalisation particulier où le dispositif périphérique est une clé d'accès, une fois le dispositif 32 du réseau local associé avec la clé d'accès 31 par l'interface sans fil, cette association permet au dispositif d'accueil 21 d'échanger des données avec le dispositif 32 par l'intermédiaire de la clé d'accès 31 au moyen d'une interface sans fil dans un réseau local grâce à un pilote pour la clé d'accès installé sur le dispositif d'accueil 21.

On constate qu'il est ainsi possible de déporter une exploitation du dispositif périphérique dans un système d'accueil situé dans le réseau. Le dispositif d'accès 30 comprend un agent générique, qui peut prendre en charge n'importe quel dispositif périphérique connecté par une interface USB. Cet agent générique intervient tant sur le plan de contrôle que sur le plan de transport de données pour permettre de connecter un dispositif périphérique USB à un service dans le réseau. Un lien virtuel est ainsi créé entre le dispositif périphérique USB et un dispositif d'accueil. Ce dernier peut également comprendre un module applicatif pour mettre en œuvre un service. Les modifications associées à la prise en charge d'un nouveau type de dispositif périphérique sont ainsi effectuées uniquement dans le réseau et ne nécessitent pas de modifications du dispositif d'accès 30. Dans l'exemple de réalisation particulier où une nouvelle interface sans fil ou bien une nouvelle technologie radio sont requises dans un réseau domotique, il suffit de connecter à la passerelle d'accès (ou au boitier domotique) une clé d'accès spécifique à cette technologie. Cette connexion n'entraîne pas de modifications au niveau de la passerelle d'accès ou du boitier domotique.

Dans le plan de transport de données, l'encapsulation dans des trames IP des trames USB au plus bas niveau permet d'exploiter le dispositif périphérique connecté par une interface USB. Le pilote logiciel associé à un dispositif périphérique est alors déployé dans le réseau et non plus sur le dispositif d'accès. Dans l'exemple de réalisation particulier où le dispositif périphérique est une clé d'accès USB, il est alors possible de remonter et de centraliser dans le réseau les informations émises par les clés d'accès connectées.

Le procédé s'appuie sur une logique de service centrale exécutée par le dispositif de contrôle 20 dans le plan de contrôle, permettant à un fournisseur de service d'exploiter directement un dispositif périphérique USB. Dans l'exemple de réalisation particulier où le dispositif périphérique est une clé d'accès USB, le fournisseur de service peut alors exploiter des données de capteurs associés, situés dans un réseau domotique local.

Dans un mode de réalisation particulier, à l'étape E4, le dispositif de contrôle 20 sélectionne un dispositif d'accueil 21 adapté pour accueillir un type de dispositif périphérique, identifié par l'identifiant de fournisseur et de produit VID/PID fourni par dispositif périphérique 31 à l'étape E3 dans la donnée M2.

Dans le mode de réalisation décrit, le dispositif d'accès 30 reçoit un accord d'accueil implicite par la réception d'une commande N3 d'externaliser les ressources du dispositif périphérique 31.

Dans un autre mode de réalisation particulier, le dispositif de contrôle 20 envoie un accord d'accueil ou un refus d'accueil explicite à l'étape E3. Le dispositif d'accès 30 peut alors mémoriser dans des listes des identifiants de produit aptes à être accueillis ou non par le système d'accueil. Ceci permet d'éviter des envois de données indiquant qu'un dispositif périphérique s'est connecté, lorsqu'il ne peut pas être accueilli.

Dans un autre mode de réalisation particulier, lors de l'enregistrement du dispositif d'accès 30 à l'étape E1, le dispositif de contrôle 20 transmet en réponse à la demande d'enregistrement une liste d'identifiants de produit, ou une liste de classes de produit, aptes à être accueillis par le système d'accueil, dite liste blanche. Ainsi, le dispositif d'accès 30 vérifie avant envoi de la donnée M2 indiquant qu'un dispositif périphérique lui est connecté si ce dernier peut être accueilli à partir des identifiants de produit, ou de classes de produit le cas échéant, mémorisés dans la liste blanche. Lorsque ce n'est pas le cas, la donnée M2 n'est pas envoyée et le procédé d'accès est terminé. Il est ici souligné qu'il est également possible d'envoyer une liste d'identifiants de produit, une liste de classes de produit, qui ne peuvent pas être accueillis par le système d'accueil, dite liste noire. Dans ce cas, le dispositif d'accès 30 vérifie avant envoi de la donnée M2 indiquant qu'un dispositif périphérique lui est connecté si ce dernier peut être accueilli à partir des identifiants de produit, ou de classes de produits le cas échéant, mémorisés dans la liste noire. Ceci permet également d'éviter des envois de données indiquant qu'un dispositif périphérique s'est connecté, lorsqu'il ne peut pas être accueilli.

La **figure 3** illustre l'étape E4 de contrôle d'une association entre un dispositif d'accès 30 et un dispositif d'accueil 21 dans le plan de transport de données dans un mode particulier de réalisation.

Dans ce mode de réalisation particulier, le système d'accueil correspond à un système informatique dans le nuage. Les dispositifs d'accueil 21 correspondent notamment à des machines virtualisées du système informatique dans le nuage.

Dans une sous-étape E41, le dispositif de contrôle 20 vérifie si au moins un dispositif d'accueil 21 dispose de capacités suffisantes pour accueillir la clé d'accès 31.

Lorsqu'il existe au moins un dispositif d'accueil, le procédé met en œuvre une sous-étape E43 de sélection de dispositif d'accueil, décrite ultérieurement.

Lorsqu'il n'existe aucun dispositif disposant de capacités suffisantes pour accueillir le dispositif périphérique 31, dans une sous-étape E42, le dispositif de contrôle 20 crée ou demande une création d'une machine virtuelle formant un nouveau dispositif d'accueil.

A la sous-étape E43 de sélection, le dispositif de contrôle 20 sélectionne un des dispositifs d'accueil identifiés à la sous-étape E41 ou le nouveau dispositif d'accueil nouvellement créé à la sous-étape E42.

A la sous-étape E44, le dispositif de contrôle 20 commande au dispositif d'accueil sélectionné une association avec le dispositif périphérique 31, comme décrit précédemment en relation avec la figure 2.

Dans un mode de réalisation particulier, le dispositif de contrôle 20 supervise les capacités d'accueil pour un type de dispositif périphérique. Plus précisément, il vérifie si les capacités d'accueil disponibles pour des dispositifs périphériques d'identifiant de produit identique sont inférieures à un seuil et le cas échéant, crée une machine virtuelle formant un nouveau dispositif d'accueil.

Dans un mode de réalisation particulier, le dispositif de contrôle 20 reçoit une notification en provenance du dispositif d'accès 31 lorsqu'un dispositif périphérique est déconnecté. Le dispositif de contrôle peut alors supprimer une machine virtuelle lorsqu'elle n'accueille plus de dispositifs périphériques.

On constate que dans ce mode de réalisation, associé à une mise en œuvre dans un environnement virtualisé, il est possible d'adapter dynamiquement le système d'accueil, afin qu'il puisse prendre en charge de nouveaux dispositifs périphériques en fonction des demandes. Le système d'accueil s'adapte également aux demandes de connexion en provenance de nouveaux produits, en créant à la demande des dispositifs d'accueil aptes à les accueillir.

Le dispositif de contrôle 20 peut adapter dynamiquement les ressources pour permettre une exploitation directe du dispositif périphérique par un dispositif d'accueil. Cette adaptation dynamique de ressources se fait en fonction de certains critères techniques comme les identifiants de produit mais aussi en fonction de la disponibilité des ressources. Ainsi, si certaines ressources pour un type de dispositif périphérique sont en nombre insuffisant par rapport à un parc en croissance, le dispositif de contrôle va pouvoir créer de nouvelles ressources. Au contraire, si des dispositifs périphériques de même type sont mis hors service, le dispositif de contrôle peut réaffecter les ressources inutilisées.

Il est ici souligné que ces modes de réalisation ont été décrits dans le contexte d'une connexion du dispositif périphérique par une interface série universelle, de type USB. Ces modes de réalisation sont aisément transposables à d'autres types de liaisons filaires, tels que FireWire, i.LINK, Thunderbolt,...

Nous allons maintenant décrire un dispositif d'accès 30 dans un mode particulier de réalisation en référence à la **figure 4**. Le dispositif d'accès 30 dispose d'un accès à un réseau de communication étendu et comprend notamment :
- une zone mémoire 301, agencée pour mémoriser une application qui comprend des instructions de code pour mettre en œuvre les étapes du procédé d'accès, tel que décrit précédemment ;
- une mémoire de stockage, non représentée, agencée pour stocker des données utilisées lors de la mise en œuvre du procédé d'accès, tel que décrit précédemment :
   - un processeur 300 pour exécuter des instructions de code de modules logiciels ;
   - au moins un connecteur 302, agencé pour accueillir au moins un dispositif périphérique au moyen d'une interface série ;
   - un module logiciel 303, agencé pour envoyer à un dispositif de contrôle 20 une donnée M2 indiquant qu'un dispositif périphérique 31 est connecté au moyen du connecteur, pour recevoir une commande N3 d'externalisation de ressources du dispositif périphérique en provenance d'un dispositif d'accueil et pour associer ce dispositif d'accueil avec le dispositif périphérique, ladite association permettant un accès à distance par ledit dispositif d'accueil pour exploiter le dispositif périphérique au moyen d'un pilote pour le dispositif périphérique installé sur ledit dispositif d'accueil ;
   - un module 304 d'encapsulation et d'extraction, agencé pour encapsuler ou extraire des trames USB dans des trames IP.

Le module logiciel 304 est également appelé agent générique précédemment.

Il est ici souligné que le dispositif d'accès 30 comprend également d'autres modules de traitement, non représentés sur la figure 4, agencés pour mettre en œuvre les différentes fonctions de dispositif d'accès.

Le dispositif de contrôle 20, tel que représenté à la **figure 5****,** comprend notamment dans un mode particulier de réalisation :
- une zone mémoire 201, agencée pour mémoriser une application qui comprend des instructions de code pour mettre en œuvre les étapes du procédé d'accès, tel que décrit précédemment ;
- une mémoire de stockage, non représentée, agencée pour stocker des données utilisées lors de la mise en œuvre du procédé d'accès, tel que décrit précédemment :
   - un processeur 200 pour exécuter des instructions de code de modules logiciels ;
   - un module d'interface 202, agencé pour envoyer et recevoir des données ;
   - un module 203 de commande d'association, agencé pour envoyer à un dispositif d'accueil 21 une commande N2 d'association avec ledit dispositif périphérique au moyen de l'adresse du dispositif d'accès, l'exécution de la commande d'association déclenchant un envoi par le dispositif d'accueil au dispositif d'accès d'une commande d'externalisation des ressources du dispositif périphérique et ladite association permettant un accès à distance par ledit dispositif d'accueil par l'intermédiaire du dispositif d'accès pour exploiter le dispositif périphérique au moyen d'un pilote pour dispositif périphérique installé sur ledit dispositif d'accueil ;
   - un module 204 de contrôle d'un ou de plusieurs dispositifs d'accueil 21, 22.

Le module 202 d'interface est notamment agencé pour recevoir une donnée M2 indiquant qu'un dispositif périphérique 31 est connecté à un dispositif d'accès 30 permettant un accès au réseau de communication étendu.

Dans un mode de réalisation particulier, le module 204 de contrôle est en outre agencé pour gérer des ressources virtualisées, notamment pour créer ou supprimer au moins une machine virtuelle formant un dispositif d'accueil.

Il est ici souligné que le dispositif de contrôle 20 comprend également d'autres modules de traitement, non représentés sur la figure 5, agencés pour mettre en œuvre les différentes fonctions de ce dispositif.

Le dispositif d'accueil 21, tel que représenté à la **figure 6**, comprend notamment dans un mode particulier de réalisation :
- une zone mémoire 211, agencée pour mémoriser une application qui comprend des instructions de code pour mettre en œuvre les étapes du procédé d'accès, tel que décrit précédemment ;
   - une mémoire de stockage, non représentée, agencée pour stocker des données utilisées lors de la mise en œuvre du procédé d'accès, tel que décrit précédemment :
   - un processeur 210 pour exécuter des instructions de code de modules logiciels ;
   - un module d'interface 212, agencé pour envoyer et recevoir des données ;
   - un module 213 d'association, agencé pour recevoir une commande (N2) d'association avec un dispositif périphérique au moyen de l'adresse d'un dispositif d'accès et pour, lors de l'exécution de la commande d'association, envoyer une commande (N3) d'externalisation de ressources du dispositif périphérique au dispositif d'accès ;
   - un module 204 d'exploitation, agencé pour exploiter à distance un dispositif périphérique au moyen d'un pilote pour le dispositif périphérique installé sur ledit dispositif d'accueil.

Il est ici souligné que le dispositif d'accueil 21 comprend également d'autres modules de traitement, non représentés sur la figure 6, agencés pour mettre en œuvre les différentes fonctions de ce dispositif.

La technique d'accès est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 303, 304 sont agencés pour mettre en œuvre le procédé d'accès précédemment décrit. Il s'agit de préférence de modules logiciels comprenant des instructions logicielles pour faire exécuter celles des étapes du procédé d'accès précédemment décrit, mises en œuvre par un dispositif d'accès. L'invention concerne donc aussi :
- un programme pour un dispositif d'accès, comprenant des instructions de code de programme destinées à commander l'exécution des étapes du procédé d'accès précédemment décrit, lorsque ledit programme est exécuté par ce dispositif ;
- un support d'enregistrement lisible par un dispositif d'accès sur lequel est enregistré le programme pour un dispositif.

Dans un mode de réalisation particulier, les modules 203, 204 sont agencés pour mettre en œuvre le procédé d'accès précédemment décrit. Il s'agit de préférence de modules logiciels comprenant des instructions logicielles pour faire exécuter celles des étapes du procédé d'accès précédemment décrit, mises en œuvre par un dispositif de contrôle. L'invention concerne donc aussi :
- un programme pour un dispositif de contrôle, comprenant des instructions de code de programme destinées à commander l'exécution des étapes du procédé d'accès précédemment décrit, lorsque ledit programme est exécuté par ledit dispositif ;
- un support d'enregistrement lisible par un dispositif de contrôle sur lequel est enregistré le programme pour un dispositif.

Dans un mode de réalisation particulier, les modules 213, 214 sont agencés pour mettre en œuvre le procédé d'accès précédemment décrit. Il s'agit de préférence de modules logiciels comprenant des instructions logicielles pour faire exécuter celles des étapes du procédé d'accès précédemment décrit, mises en œuvre par un dispositif d'accueil. L'invention concerne donc aussi :
- un programme pour un dispositif d'accueil, comprenant des instructions de code de programme destinées à commander l'exécution des étapes du procédé d'accès précédemment décrit, lorsque ledit programme est exécuté par ledit dispositif ;
- un support d'enregistrement lisible par un dispositif d'accueil sur lequel est enregistré le programme pour un dispositif.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

Il va de soi que les modes de réalisation qui ont été décrits précédemment ont été donnés à titre purement indicatif et nullement limitatif, et que de nombreuses modifications peuvent être facilement apportées par l'homme de l'art sans pour autant sortir du cadre de l'invention qui est définie par les revendications.

## Revendications

1. Procédé d'accès par l'intermédiaire d'un réseau de communication étendu à un dispositif périphérique, ledit procédé comprenant :
- réception (E3) par un dispositif de contrôle (20) d'une donnée (M2) indiquant que le dispositif périphérique (31) est connecté par une interface série à un dispositif d'accès (30) disposant d'un accès au réseau de communication étendu ;
- envoi (E4, E44) par le dispositif de contrôle à un dispositif d'accueil (21, 22) d'une commande (N2) d'association avec ledit dispositif périphérique au moyen d'une adresse associée au dispositif d'accès, l'exécution de la commande d'association déclenchant un envoi par le dispositif d'accueil au dispositif d'accès d'une commande d'externalisation des ressources du dispositif périphérique et ladite association permettant un accès à distance par ledit dispositif d'accueil par l'intermédiaire du dispositif d'accès pour exploiter le dispositif périphérique au moyen d'un pilote pour le dispositif périphérique installé sur le dispositif d'accueil.

2. Procédé d'accès selon la revendication 1, comprenant en outre une sélection (E43) dudit dispositif d'accueil par le dispositif de contrôle en fonction d'un identifiant de produit du dispositif périphérique.

3. Procédé d'accès selon la revendication 2, comprenant en outre une création (E42) d'une machine virtuelle formant un nouveau dispositif d'accueil, lorsqu'aucun dispositif d'accueil ne dispose de capacités requises pour accueillir le dispositif périphérique.

4. Procédé d'accès selon la revendication 2, comprenant en outre une création (E42) d'une machine virtuelle formant un nouveau dispositif d'accueil, lorsque les capacités d'accueil disponibles pour des dispositifs périphériques d'identifiant de produit identique sont inférieures à un seuil.

5. Procédé d'accès selon la revendication 1, comprenant un envoi au dispositif d'accès d'au moins un identifiant de produit ne pouvant être accueilli.

6. Procédé d'accès selon la revendication 1, dans lequel ladite donnée est envoyée par le dispositif d'accès (30) au dispositif de contrôle (20) et le procédé comprend en outre ;
- réception (F3) par le dispositif d'accès de la commande (N3) d'externalisation des ressources du dispositif périphérique en provenance du dispositif d'accueil ;
- association du dispositif d'accueil avec le dispositif périphérique par l'intermédiaire du dispositif d'accès.

7. Dispositif de contrôle (20) pour un accès par l'intermédiaire d'un réseau de communication étendu à un dispositif périphérique, ledit dispositif comprenant :
- un module (202) de réception d'une donnée (M2) indiquant que le dispositif périphérique (31) est connecté par une interface série à un dispositif d'accès (30) disposant d'un accès au réseau de communication étendu ;
- un module (203) de commande d'association, agencé pour envoyer à un dispositif d'accueil (21) une commande (N2) d'association avec ledit dispositif périphérique au moyen d'une adresse associée au dispositif d'accès, l'exécution de la commande d'association déclenchant un envoi par le dispositif d'accueil au dispositif d'accès d'une commande d'externalisation des ressources du dispositif périphérique et ladite association permettant un accès à distance par ledit dispositif d'accueil par l'intermédiaire du dispositif d'accès pour exploiter le dispositif périphérique au moyen d'un pilote pour le dispositif périphérique installé sur ledit dispositif d'accueil.

8. Dispositif de contrôle selon la revendication 7, comprenant en outre un module (204) de gestion de ressources virtualisées, agencé pour créer ou supprimer au moins une machine virtuelle formant un dispositif d'accueil.

9. Système d'accueil (2) pour un accès par l'intermédiaire d'un réseau de communication étendu à un dispositif périphérique, ledit système comprenant au moins un dispositif de contrôle selon la revendication 7 et au moins un dispositif d'accueil, ledit dispositif d'accueil (21, 22), comprenant :
- un module d'exploitation (214), agencé pour exploiter à distance un dispositif périphérique au moyen d'un pilote pour le dispositif périphérique installé sur ledit dispositif d'accueil ;
- un module d'association (213), agencé pour recevoir une commande (N2) d'association avec un dispositif périphérique au moyen de l'adresse d'un dispositif d'accès et pour, lors de l'exécution de la commande d'association, envoyer une commande (N3) d'externalisation des ressources du dispositif périphérique au dispositif d'accès.

10. Système d'accès par l'intermédiaire d'un réseau de communication étendu à un dispositif périphérique, ledit système d'accès comprenant un système d'accueil selon la revendication 9 et un dispositif d'accès à un réseau de communication étendu, ledit dispositif d'accès comprenant :
- au moins un connecteur (302), agencé pour accueillir au moins un dispositif périphérique par une interface série ;
- un module logiciel (303), agencé pour envoyer à un dispositif de contrôle (20) une donnée (M2) indiquant que le dispositif périphérique (31) est connecté au moyen du connecteur, pour recevoir une commande (N3) d'externalisation des ressources du dispositif périphérique en provenance d'un dispositif d'accueil et pour associer ledit dispositif d'accueil avec ledit dispositif périphérique, ladite association permettant un accès à distance par le dispositif d'accueil pour exploiter le dispositif périphérique au moyen d'un pilote pour le dispositif périphérique installé sur ledit dispositif d'accueil.

11. Programme pour un dispositif, comprenant des instructions de code de programme destinées à commander l'exécution de celles des étapes du procédé d'accès selon l'une des revendications 1 à 6 mises en oeuvre par le dispositif, lorsque ledit programme est exécuté par ledit dispositif.

12. Support d'enregistrement lisible par un dispositif sur lequel est enregistré le programme selon la revendication 11.

## Patentansprüche

1. Verfahren zum Zugriff über ein Weitverkehrsnetz auf eine periphere Vorrichtung, wobei das Verfahren umfasst:
- Empfang (E3), durch eine Steuervorrichtung (20), eines Datenelements (M2), welches angibt, dass die periphere Vorrichtung (31) über eine serielle Schnittstelle an eine Zugriffsvorrichtung (30) angeschlossen ist, die über einen Zugriff auf das Weitverkehrsnetz verfügt;
- Senden (E4, E44), durch die Steuervorrichtung an eine Aufnahmevorrichtung (21, 22), eines Befehls (N2) zur Verbindung mit der peripheren Vorrichtung mittels einer der Zugriffsvorrichtung zugeordneten Adresse, wobei die Ausführung des Verbindungsbefehls ein Senden, durch die Aufnahmevorrichtung an die Zugriffsvorrichtung, eines Befehls zur Externalisierung der Ressourcen der peripheren Vorrichtung auslöst und die Verbindung einen Fernzugriff durch die Aufnahmevorrichtung über die Zugriffsvorrichtung ermöglicht, um die periphere Vorrichtung mittels eines auf der Aufnahmevorrichtung installierten Treibers für die periphere Vorrichtung zu betreiben.

2. Verfahren zum Zugriff nach Anspruch 1, welches außerdem eine Auswahl (E43) der Aufnahmevorrichtung durch die Steuervorrichtung in Abhängigkeit von einer Produktkennung der peripheren Vorrichtung umfasst.

3. Verfahren zum Zugriff nach Anspruch 2, welches außerdem eine Erzeugung (E42) einer virtuellen Maschine umfasst, die eine neue Aufnahmevorrichtung bildet, wenn keine Aufnahmevorrichtung über die erforderlichen Kapazitäten zum Aufnehmen der peripheren Vorrichtung verfügt.

4. Verfahren zum Zugriff nach Anspruch 2, welches außerdem eine Erzeugung (E42) einer virtuellen Maschine umfasst, die eine neue Aufnahmevorrichtung bildet, wenn die Aufnahmekapazitäten, die für periphere Vorrichtungen mit identischer Produktkennung verfügbar sind, niedriger als ein Schwellenwert sind.

5. Verfahren zum Zugriff nach Anspruch 1, welches ein Senden, an die Zugriffsvorrichtung, wenigstens einer Produktkennung umfasst, die nicht aufgenommen werden kann.

6. Verfahren zum Zugriff nach Anspruch 1, wobei das Datenelement von der Zugriffsvorrichtung (30) an die Steuervorrichtung (20) gesendet wird und das Verfahren außerdem umfasst:
- Empfang (F3), durch die Zugriffsvorrichtung, des von der Aufnahmevorrichtung kommenden Befehls (N3) zur Externalisierung der Ressourcen der peripheren Vorrichtung;
- Verbindung der Aufnahmevorrichtung mit der peripheren Vorrichtung über die Zugriffsvorrichtung.

7. Steuervorrichtung (20) für einen Zugriff über ein Weitverkehrsnetz auf eine periphere Vorrichtung, wobei die Steuervorrichtung umfasst:
- ein Modul (202) zum Empfang eines Datenelements (M2), welches angibt, dass die periphere Vorrichtung (31) über eine serielle Schnittstelle an eine Zugriffsvorrichtung (30) angeschlossen ist, die über einen Zugriff auf das Weitverkehrsnetz verfügt;
- ein Modul (203) zur Verbindungssteuerung, das dafür ausgelegt ist, an eine Aufnahmevorrichtung (21) einen Befehl (N2) zur Verbindung mit der peripheren Vorrichtung mittels einer der Zugriffsvorrichtung zugeordneten Adresse zu senden, wobei die Ausführung des Verbindungsbefehls ein Senden, durch die Aufnahmevorrichtung an die Zugriffsvorrichtung, eines Befehls zur Externalisierung der Ressourcen der peripheren Vorrichtung auslöst und die Verbindung einen Fernzugriff durch die Aufnahmevorrichtung über die Zugriffsvorrichtung ermöglicht, um die periphere Vorrichtung mittels eines auf der Aufnahmevorrichtung installierten Treibers für die periphere Vorrichtung zu betreiben.

8. Steuervorrichtung nach Anspruch 7, welche außerdem ein Modul (204) zur Verwaltung virtualisierter Ressourcen umfasst, das dafür ausgelegt ist, wenigstens eine virtuelle Maschine, die eine Aufnahmevorrichtung bildet, zu erzeugen oder zu löschen.

9. Aufnahmesystem (2) für einen Zugriff über ein Weitverkehrsnetz auf eine periphere Vorrichtung, wobei das System wenigstens eine Steuervorrichtung nach Anspruch 7 und wenigstens eine Aufnahmevorrichtung umfasst, wobei die Aufnahmevorrichtung (21, 22) umfasst:
- ein Betriebsmodul (214), das dafür ausgelegt ist, eine periphere Vorrichtung mittels eines auf der Aufnahmevorrichtung installierten Treibers für die periphere Vorrichtung per Fernsteuerung zu betreiben;
- ein Verbindungsmodul (213), das dafür ausgelegt ist, einen Befehl (N2) zur Verbindung mit einer peripheren Vorrichtung mittels der Adresse einer Zugriffsvorrichtung zu empfangen und bei der Ausführung des Verbindungsbefehls einen Befehl (N3) zur Externalisierung der Ressourcen der peripheren Vorrichtung an die Zugriffsvorrichtung zu senden.

10. System zum Zugriff über ein Weitverkehrsnetz auf eine periphere Vorrichtung, wobei das System zum Zugriff ein Aufnahmesystem nach Anspruch 9 und eine Vorrichtung zum Zugriff auf ein Weitverkehrsnetz umfasst, wobei diese Zugriffsvorrichtung umfasst:
- wenigstens einen Verbinder (302), der dafür ausgelegt ist, wenigstens eine periphere Vorrichtung über eine serielle Schnittstelle aufzunehmen;
- ein Software-Modul (303), das dafür ausgelegt ist, an eine Steuervorrichtung (20) ein Datenelement (M2) zu senden, welches angibt, dass die periphere Vorrichtung (31) mittels des Verbinders angeschlossen ist, um einen Befehl (N3) zur Externalisierung der Ressourcen der peripheren Vorrichtung von einer Aufnahmevorrichtung zu empfangen, und um die Aufnahmevorrichtung mit der peripheren Vorrichtung zu verbinden, wobei diese Verbindung einen Fernzugriff durch die Aufnahmevorrichtung ermöglicht, um die periphere Vorrichtung mittels eines auf der Aufnahmevorrichtung installierten Treibers für die periphere Vorrichtung zu betreiben.

11. Programm für eine Vorrichtung, welches Programmcodeanweisungen umfasst, die dazu bestimmt sind, die Ausführung derjenigen Schritte des Verfahrens zum Zugriff nach einem der Ansprüche 1 bis 6 zu steuern, die von der Vorrichtung durchgeführt werden, wenn das Programm von der Vorrichtung ausgeführt wird.

12. Von einer Vorrichtung lesbares Aufzeichnungsmedium, auf welchem das Programm nach Anspruch 11 aufgezeichnet ist.

## Claims

1. Method for accessing a peripheral device via a wide area communication network, said method comprising:
- receiving (E3), by a control device (20), a datum (M2) indicating that the peripheral device (31) is connected by means of a serial interface to an access device (30) having access to the wide area communication network;
- sending (E4, E44), to a host device (21, 22), by means of the control device, a command (N2) to associate with said peripheral device by means of an address associated with the access device, the execution of the association command triggering the sending, by the host device to the access device, of a command to outsource resources of the peripheral device, and said association allowing remote access by said host device via the access device in order to operate the peripheral device by means of a driver for the peripheral device, which is installed on the host device.

2. Access method according to Claim 1, further comprising selecting (E43) said host device by means of the control device depending on a product identifier of the peripheral device.

3. Access method according to Claim 2, further comprising creating (E42) a virtual machine forming a new host device when no host device has the capacities required to host the peripheral device.

4. Access method according to Claim 2, further comprising creating (E42) a virtual machine forming a new host device when the hosting capacities available for peripheral devices having identical product identifiers are lower than a threshold.

5. Access method according to Claim 1, comprising sending, to the access device, at least one identifier of a product unable to be hosted.

6. Access method according to Claim 1, wherein said datum is sent by the access device (30) to the control device (20), and the method further comprises:
- receiving (F3), by means of the access device, the command (N3) from the host device to outsource resources of the peripheral device;
- associating the host device with the peripheral device via the access device.

7. Control device (20) for accessing a peripheral device via a wide area communication network, said device comprising:
- a module (202) for receiving a datum (M2) indicating that the peripheral device (31) is connected by means of a serial interface to an access device (30) having access to the wide area communication network;
- an association command module (203), which is designed to send, to a host device (21), a command (N2) to associate with said peripheral device by means of an address associated with the access device, the execution of the association command triggering the sending, by the host device to the access device, of a command to outsource resources of the peripheral device, and said association allowing remote access by said host device via the access device in order to operate the peripheral device by means of a driver for the peripheral device, which is installed on said host device.

8. Control device according to Claim 7, further comprising a module (204) for managing virtualized resources, which is designed to create or remove at least one virtual machine forming a host device.

9. Host system (2) for accessing a peripheral device via a wide area communication network, said system comprising at least one control device according to Claim 7 and at least one host device, said host device (21, 22) comprising:
- an operating module (214), which is designed to remotely operate a peripheral device by means of a driver for the peripheral device, which is installed on said host device,
- an association module (213), which is designed to receive a command (N2) to associate with a peripheral device by means of the address of an access device and, during the execution of the association command, to send to the access device a command (N3) to outsource resources of the peripheral device.

10. System for accessing a peripheral device via a wide area communication network, said access system comprising a host system according to Claim 9 and a device for accessing a wide area communication network, said access device comprising:
- at least one connector (302), which is designed to receive at least one peripheral device by means of a serial interface;
- a software module (303), which is designed to send, to a control device (20), a datum (M2) indicating that the peripheral device (31) is connected by means of the connector, to receive a command (N3) from a host device to outsource resources of the peripheral device and to associate said host device with said peripheral device, said association allowing remote access by the host device in order to operate the peripheral device by means of a driver for the peripheral device, which is installed on said host device.

11. Program for a device, comprising program code instructions that are intended to command the execution of those steps of the access method according to one of Claims 1 to 6 that are implemented by the device, when said program is executed by said device.

12. Recording medium that can be read by a device on which the program according to Claim 11 is recorded.
